# FASCICULE DE BREVET EUROPEEN

(11) **EP 1 350 663 B1**
(45) Date de publication et mention de la délivrance du brevet: **01.06.2005**
(21) Numéro de dépôt: 03290630.7
(22) Date de dépôt: 13.03.2003
(51) Int. Cl.: B60K 41/28, B60T 7/10, B60T 7/12, B60T 8/00

(54) **Procédé de gestion de la stabilité en pente d'un véhicule automobile équipé d'un embrayage piloté**
Steuerungsverfahren für Berganfahrhilfe in einem Fahrzeug mit einer automatisierten Kupplung
Hill hold control method for vehicle equipped with an automatic clutch

(30) Priorité: 03.04.2002 FR 0204155
(43) Date de publication de la demande: 08.10.2003
(73) Titulaire: Peugeot Citroen Automobiles SA, 92200 Neuilly sur Seine (FR)
(72) Inventeur: Bailleux, Francois, 91400 Val d'Albian (FR); Levasseur, Joel, 77220 Gretz (FR)
(74) Mandataire: Thinat, Michel

(56) Documents cités:
- EP-A- 1 223 368
- DE-A- 19 836 687
- FR-A- 2 809 065
- FR-A- 2 813 838
- US-A- 4 629 043
- PATENT ABSTRACTS OF JAPAN vol. 2000, no. 09, 13 octobre 2000 (2000-10-13) -& JP 2000 168520 A (NABCO LTD), 20 juin 2000 (2000-06-20)
- PATENT ABSTRACTS OF JAPAN vol. 008, no. 276 (M-346), 18 décembre 1984 (1984-12-18) -& JP 59 145658 A (MAZDA KK), 21 août 1984 (1984-08-21)

## Description

La présente invention concerne, de façon générale, un procédé de gestion de l'état et du fonctionnement d'un véhicule automobile.

Plus précisément, l'invention concerne un procédé de gestion de la stabilité en pente d'un véhicule automobile présentant une composante de poids orientée suivant la pente, équipé d'un moteur développant un couple au moins partiellement transmis à au moins une roue motrice par l'intermédiaire d'un embrayage piloté, et doté d'un système de freinage dynamique et d'un système de freinage statique, ce procédé comprenant un test récurrent permettant de détecter un état d'équilibre du véhicule sur la pente obtenu par transmission à la roue motrice d'une fraction du couple moteur qui compense la composante de poids du véhicule, une opération de stabilisation dans laquelle la stabilité du véhicule sur la pente est obtenue par freinage, une opération de soulagement dans laquelle la transmission de la fraction de couple moteur à la roue motrice est interrompue, et une opération de libération du véhicule déclenchée par une demande d'accélération du véhicule et dans laquelle la transmission de couple moteur à la roue motrice est rétablie et le freinage désactivé pour permettre au véhicule de repartir sur la pente.

Un procédé de ce type est déjà connu au moins par le document de brevet FR-A-2 809 065.

Lorsqu'un véhicule est équipé d'un embrayage piloté, le poste de conduite ne comporte pas de pédale d'embrayage, mais seulement une pédale de frein et une pédale d'accélérateur.

Le conducteur est ainsi invité à considérer que l'optimisation des fonctions mécaniques du véhicule doit être laissée au système de gestion fonctionnelle dont ce dernier est doté, le conducteur se concentrant sur le pilotage lui-même.

Si un tel véhicule est immobilisé dans une pente, le conducteur peut aisément, sans freiner, éviter que le véhicule ne redescende la pente en sollicitant l'accélérateur de façon appropriée.

Comme cependant le moteur tourne alors que les roues sont arrêtées ou pratiquement arrêtées, une partie du couple développé par le moteur est dissipée sous forme d'énergie thermique dans l'embrayage, ce qui a le double inconvénient d'augmenter la consommation de carburant et de participer à l'usure de l'embrayage.

La présente invention, comme le document de brevet précédemment cité, vise globalement à résoudre ce problème en stabilisant le véhicule sur la pente par freinage pour pouvoir soulager l'embrayage par un débrayage complet.

Néanmoins, la mise en oeuvre de cette stratégie générale se heurte encore au problème supplémentaire et très concret que pose le freinage lui-même, qui par hypothèse doit être appliqué sans intervention de la part du conducteur, et donc à partir d'une source d'énergie disponible sur le véhicule.

Alors que, dans les conditions considérées, le système de freinage statique, c'est-à-dire typiquement le frein de parking, est celui qui offre le mode idéal d'immobilisation du véhicule au plan de la sécurité, ce système est en revanche aussi celui qui dispose de la puissance d'actionnement la plus faible, et dont l'actionnement est donc le plus lent.

Dans ce contexte, la présente invention a pour but de proposer un procédé de gestion de la stabilité en pente d'un véhicule automobile offrant à la fois une dynamique très satisfaisante et un haut degré de sécurité.

A cette fin, le procédé de l'invention, par ailleurs conforme à la définition générique qu'en donne le préambule ci-dessus, est essentiellement caractérisé en ce que l'opération de stabilisation inclut une étape de mesure de la durée de l'état d'équilibre du véhicule sur la pente à compter de l'instant d'apparition de cet état, et en ce que l'opération de stabilisation est mise en oeuvre en freinant le véhicule, au plus tard après un délai de temporisation à compter de l'instant d'apparition de l'état d'équilibre, par actionnement de son système de freinage dynamique pendant au plus un premier intervalle de temps, et en freinant le véhicule par actionnement de son système de freinage statique si aucune demande d'accélération du véhicule n'intervient avant la fin du premier intervalle de temps, le système de freinage statique restant actif aussi longtemps qu'une telle demande n'intervient pas.

Pour contourner le problème supplémentaire que pose le défaut de progressivité du freinage assuré par le système de freinage statique, le procédé de l'invention comprend en outre avantageusement une opération d'inversion, conditionnellement déclenchée par une demande d'accélération lorsque le véhicule est stabilisé sur la pente par son système de freinage statique, et consistant à actionner le système de freinage dynamique en désactivant le système de freinage statique avant l'opération de libération du véhicule.

Selon un mode de réalisation pratique de l'invention, l'actionnement du système de freinage dynamique comprend la mise en marche d'une pompe électro-hydraulique alimentant en liquide de frein sous pression un récepteur de frein hydraulique, et l'actionnement du système de freinage statique comprend la mise en marche d'un moto-réducteur électrique entraînant un câble d'actionnement d'un frein de parking.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue schématique représentant un véhicule en équilibre sur une pente;
- la Figure 2 est un schéma illustrant les principaux composants du véhicule auquel fait appel le procédé de l'invention;
- la Figure 3 est un organigramme illustrant les principales opérations du procédé de l'invention; et
- les Figures 4A à 4F forment un ensemble de six diagrammes temporels synchronisés illustrant l'évolution de l'état de divers signaux ou organes au cours de deux séquences successives de stabilisation d'une véhicule sur une pente.

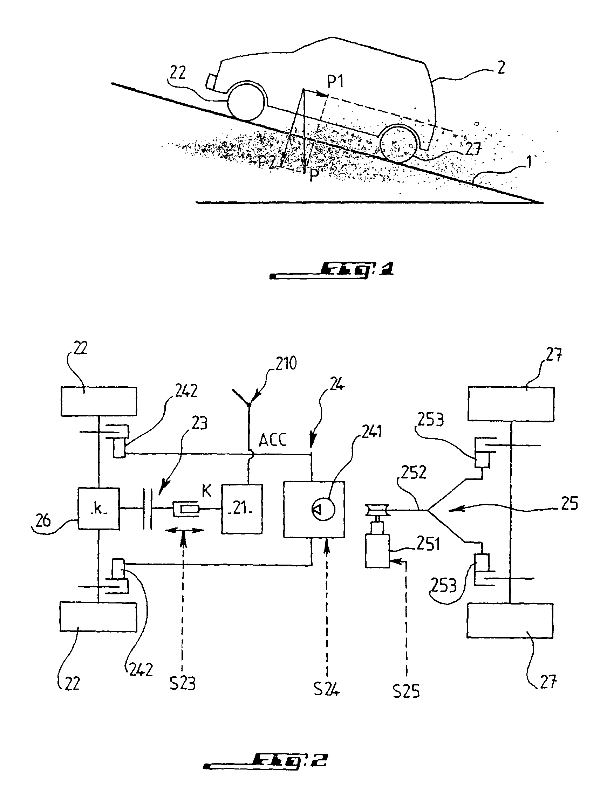

Comme annoncé précédemment, l'invention concerne un procédé permettant de gérer la stabilité, sur une pente 1, d'un véhicule automobile 2 se trouvant sur cette pente à vitesse nulle ou pratiquement nulle (figure 1).

Dans ces conditions, le poids P du véhicule 2 peut être considéré comme la somme vectorielle d'une composante de poids P1 orientée suivant la pente 1, et d'une composante de poids P2 orthogonale à la voie de circulation que forme la pente 1.

La composante de poids orthogonale P2, qui est transmise à la pente 1 par l'intermédiaire des roues 22 et 27 du véhicule 2, est intégralement compensée par la force de réaction exercée par la voie de la pente 1 sous les roues 22 et 27.

En revanche, la composante de poids P1 orientée suivant la pente 1 agit sur le véhicule 2 dans un sens qui le sollicite vers le bas de cette pente, et doit donc être compensée dans le cas où le véhicule doit rester en équilibre à vitesse nulle ou pratiquement nulle sur la pente.

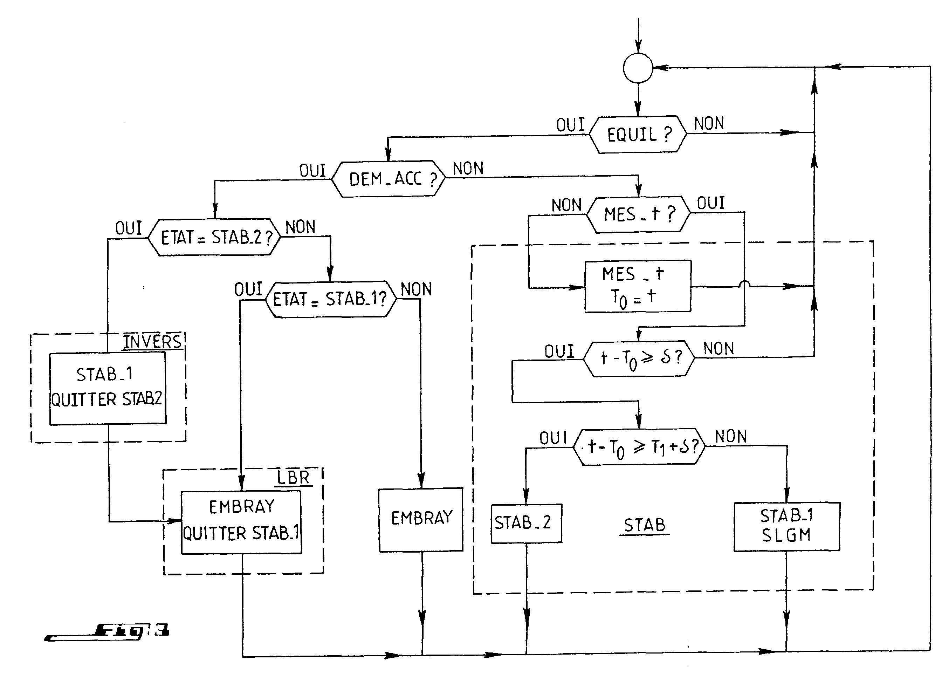

Ce véhicule automobile 2 est, par définition, supposé équipé d'un moteur 21 (figure 2) développant un couple K intégralement ou partiellement transmis aux roues motrices 22 par l'intermédiaire d'un embrayage 23.

Dans l'hypothèse, qui est celle de l'invention, où l'embrayage 23 est un embrayage piloté de façon automatique par un signal S23, une façon très simple pour le conducteur de maintenir ce véhicule en équilibre sur la pente 1 consiste à compenser la composante de poids P1 par un couple moteur transmis aux roues motrices 22.

Un premier rapport de marche avant est alors engagé si le véhicule est tourné vers le haut de la pente comme illustré sur la figure 1, et le rapport de marche arrière est engagé si le véhicule est tourné vers le bas de la pente.

En cas d'actionnement modéré de l'accélérateur 210, l'embrayage 23 est piloté par le signal de commande S23 de façon telle qu'une fraction k seulement du couple moteur K est transmise du moteur 21 aux roues motrices 22 à travers le système de transmission de couple 26, la fraction k de couple moteur compensant exactement la composante de poids P1 du véhicule, qui se trouve ainsi en équilibre sur la pente.

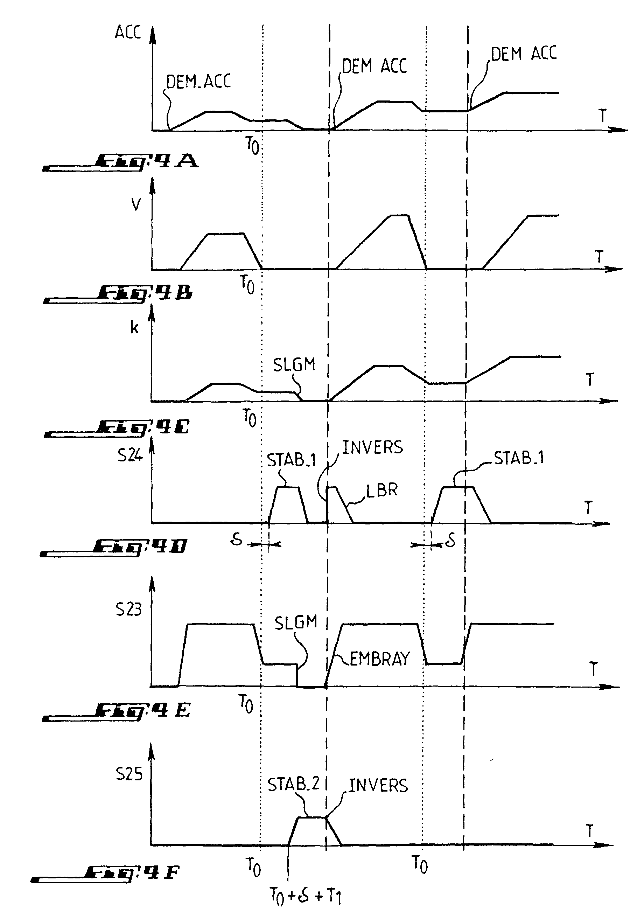

Cette situation est celle qu'illustrent les figures 4A à 4C pour l'instant To, et qui se caractérise au moins par le fait que la sollicitation ACC de l'accélérateur 210 est modérée (figure 4A), comme l'est donc également le couple k transmis aux roues motrices 22 (figure 4C), alors que la vitesse V du véhicule est nulle ou approximativement nulle (figure 4B).

Parallèlement, pour éviter le calage du moteur 21 pendant la chute de la vitesse V du véhicule, le signal de commande S23 de l'embrayage 23 (figure 4E) opère un débrayage partiel permettant le patinage de l'embrayage 23.

Cet état de fonctionnement du véhicule, qui est tout à fait normal s'il se produit de façon seulement occasionnelle et transitoire, est en revanche inacceptable s'il se prolonge dans le temps.

Pour éviter une telle situation, le procédé de l'invention comprend, de façon connue en soi (figure 3), un test récurrent EQUIL permettant de détecter si le véhicule 2 est maintenu en équilibre sur une pente 1 par transmission à la roue motrice 22 d'une fraction k du couple moteur K compensant la composante de poids P1 de ce véhicule.

Si c'est le cas, le procédé de l'invention déclenche sélectivement une opération de stabilisation STAB, grâce à laquelle la stabilité du véhicule 2 sur la pente 1 est assurée par un freinage de ce véhicule, et une opération de soulagement SLGM dans laquelle, une fois le véhicule stabilisé par freinage, le couplage du moteur 21 avec les roues motrices 22 est interrompu par débrayage, c'est-à-dire par désactivation de l'embrayage 23 et réduction de la vitesse moteur.

En cas d'apparition d'une demande d'accélération DEM_ACC du véhicule, concrètement constituée par un enfoncement de la pédale d'accélérateur 210 sous un effort exercé par le conducteur, le procédé inclut le déclenchement d'une opération de libération LBR du véhicule, dans laquelle la transmission du couple moteur K à la roue motrice 22 est rétablie, et dans laquelle le freinage est désactivé, pour permettre au véhicule 2 de repartir sur la pente 1.

Le procédé de l'invention s'applique à un véhicule équipé d'un système de freinage dynamique 24 et d'un système de freinage statique 25, chacun de ces systèmes étant susceptible d'être commandé par une source d'énergie indépendante de l'énergie musculaire du conducteur.

De préférence, le système de freinage dynamique 24 comprend une pompe électro-hydraulique 241 susceptible d'alimenter en liquide de frein sous pression un ou plusieurs récepteurs 242 de frein hydraulique, et le système de freinage statique 25 comprend un moto-réducteur électrique 251 susceptible d'entraîner un câble 252 propre à actionner un frein de parking 253 agissant sur au moins deux roues 27.

De façon schématique, le procédé de l'invention prévoit, sous certaines conditions, d'utiliser séquentiellement le système de freinage dynamique 24 et le système de freinage statique 25 pour assurer une stabilité transitoire ou prolongée du véhicule 2 sur la pente 1.

Pour ce faire, l'opération de stabilisation STAB (figure 3) inclut une étape, notée MES_t, pendant laquelle est mesurée la durée de l'état d'équilibre du véhicule 2 sur la pente 1 à compter de l'instant To d'apparition de cet état, c'est-à-dire la différence entre l'instant courant t et l'instant To où le test récurrent EQUIL a permis de détecter que le véhicule 2 était maintenu en équilibre sur une pente 1 par transmission à ses roues motrices 22 d'une fraction k du couple moteur K.

Dans ces conditions, l'opération de stabilisation STAB est d'abord mise en oeuvre en freinant le véhicule 2 par actionnement de son système de freinage dynamique 24 pendant au plus un premier intervalle de temps T1 prédéterminé, de 2 secondes par exemple.

Cette opération, et l'état qui en résulte pour le véhicule, sont notés STAB_1 sur les figures 3 et 4D, cette dernière figure représentant, en fonction du temps t, le niveau du signal S24 qui commande la pompe électro-hydraulique 241.

En réalité, comme le véhicule 2 peut sans dommage rester un certain temps en équilibre sur la pente 1 par transmission à ses roues motrices d'une fraction k du couple moteur, l'actionnement du système de freinage dynamique 24 du véhicule 2 peut n'intervenir qu'après un certain délai de temporisation δ à compter de l'instant To d'apparition de l'état d'équilibre, ce délai δ étant par exemple compris entre 0 et 5 secondes.

A la fin de l'intervalle de temps T1 à compter de l'instant To+δ d'actionnement du système de freinage dynamique 24, et pour autant qu'aucune demande d'accélération DEM_ACC du véhicule ne soit intervenue entre-temps, le système de freinage statique 25 du véhicule est actionné et reste actif en attendant une future demande d'accélération DEM_ACC.

Cette opération, et l'état qui en résulte pour le véhicule, sont notés STAB_2 sur les figures 3 et 4F, cette dernière figure représentant, en fonction du temps t, le niveau du signal S25 qui commande le moto-réducteur 251 du système de freinage statique 25.

L'opération de soulagement SLGM, dans laquelle le couplage du moteur 21 avec les roues motrices 22 est interrompu par un débrayage commandé par le signal S23 (figure 4E), peut être effectuée à tout instant choisi pendant la durée de l'opération STAB_1, pour autant que le temps écoulé depuis l'instant To d'apparition de l'équilibre du véhicule 2 sur la pente 1 n'excède pas le temps pendant lequel cet équilibre peut être maintenu sans dommage pour l'embrayage 23.

Par ailleurs, une fois que le véhicule se trouve dans l'état de stabilisation STAB_2, le signal S24 (figure 4D) peut désactiver le système de freinage dynamique 24.

Lorsqu'une demande d'accélération DEM_ACC se manifeste, ultérieurement, par un enfoncement de la pédale d'accélérateur 210 (figure 4A) alors que le véhicule 2 a ainsi été stabilisé sur la pente 1 par son système de freinage statique 25, le procédé de l'invention déclenche une opération d'inversion, notée INVERS (figures 3, 4D et 4F), et consistant à la fois à actionner le système de freinage dynamique 24 et à désactiver le système de freinage statique 25.

Cette opération d'inversion INVERS prépare l'opération LBR de libération du véhicule (figures 3 et 4D), dans laquelle la transmission du couple moteur K à la roue motrice 22 est rétablie par une opération d'embrayage EMBRAY (figures 3 et 4E) pilotée par le signal S23, et dans laquelle le système de freinage dynamique 24 est lui-même désactivé, pour permettre au véhicule 2 de repartir sur la pente 1.

Comme le montrent ensemble la figure 4F et la seconde occurrence de l'état STAB_1 sur la figure 4D, l'opération de stabilisation STAB_2 du véhicule par actionnement de son système de freinage statique 25 n'est mise en oeuvre qu'après écoulement d'un intervalle de temps δ+T1 postérieurement à l'instant To et pour autant seulement qu'aucune demande d'accélération DEM_ACC ne soit intervenue entre-temps, l'opération d'inversion INVERS n'étant donc elle-même mise en oeuvre que dans ce dernier cas.

## Revendications

1. Procédé de gestion de la stabilité en pente (1) d'un véhicule automobile (2) présentant une composante de poids (P1) orientée suivant la pente (1), équipé d'un moteur (21) développant un couple (K) au moins partiellement transmis à au moins une roue motrice (22) par l'intermédiaire d'un embrayage piloté (23), et doté d'un système de freinage dynamique (24) et d'un système de freinage statique (25), ce procédé comprenant un test récurrent (EQUIL) permettant de détecter un état d'équilibre du véhicule (2) sur la pente obtenu par transmission à la roue motrice (22) d'une fraction (k) du couple moteur (K) qui compense la composante de poids (P1) du véhicule (2), une opération de stabilisation (STAB) dans laquelle la stabilité du véhicule (2) sur la pente (1) est obtenue par freinage, une opération de soulagement (SLGM) dans laquelle la transmission de la fraction (k) de couple moteur à la roue motrice (22) est interrompue, et une opération de libération (LBR) du véhicule déclenchée par une demande d'accélération (DEM_ACC) du véhicule et dans laquelle la transmission de couple moteur (K) à la roue motrice (22) est rétablie et le freinage désactivé pour permettre au véhicule (2) de repartir sur la pente (1), **caractérisé en ce que** l'opération de stabilisation (STAB) inclut une étape (MES_t) de mesure de la durée de l'état d'équilibre du véhicule (2) sur la pente (1) à compter de l'instant (To) d'apparition de cet état, et **en ce que** l'opération de stabilisation (STAB) est mise en oeuvre en freinant le véhicule (2), au plus tard après un délai de temporisation (δ) à compter de l'instant (To) d'apparition de l'état d'équilibre, par actionnement de son système de freinage dynamique (24) pendant au plus un premier intervalle de temps (T1), et en freinant le véhicule (2) par actionnement de son système de freinage statique (25) si aucune demande d'accélération (DEM_ACC) du véhicule n'intervient avant la fin du premier intervalle de temps (T1), le système de freinage statique (25) restant actif aussi longtemps qu'une telle demande (DEM_ACC) n'intervient pas.

2. Procédé suivant la revendication 1, **caractérisé en ce qu'**il comprend une opération d'inversion (INVERS), conditionnellement déclenchée par une demande d'accélération (DEM_ACC) lorsque le véhicule (2) est stabilisé sur la pente (1) par son système de freinage statique (25), et consistant à actionner le système de freinage dynamique (24) en désactivant le système de freinage statique (25) avant l'opération (LBR) de libération du véhicule.

3. Procédé suivant l'une quelconque des revendications précédentes, **caractérisé en ce que** l'actionnement du système de freinage dynamique (24) comprend la mise en marche d'une pompe électro-hydraulique (241) alimentant en liquide de frein sous pression un récepteur (242) de frein hydraulique.

4. Procédé suivant l'une quelconque des revendications précédentes, **caractérisé en ce que** l'actionnement du système de freinage statique (25) comprend la mise en marche d'un moto-réducteur électrique (251) entraînant un câble (252) d'actionnement d'un frein de parking (253).

## Patentansprüche

1. Verfahren zum Steuern des Anfahrverhaltens bzw. der Anfahrstabilität eines Kraftfahrzeugs (2) bei Steigung (1), das eine der Steigung (1) nach ausgerichtete Gewichtskomponente (P1) aufweist, mit einem Motor (21) ausgestattet ist, der ein Drehmoment (K) erzeugt, das über eine automatisierte Kupplung (23) zumindest teilweise auf mindestens ein Antriebsrad (22) übertragen wird, und das mit einem dynamischen Bremssystem (24) und einem statischen Bremssystem (25) versehen ist, wobei dieses Verfahren einen Rücklauftest (EQUIL) umfasst, mit dem ein Gleichgewichtszustand des Fahrzeugs (2) an der Steigung erfasst werden kann, der durch Übertragung eines Teils (k) des Motordrehmoments (K) auf das Antriebsrad (22) erhalten wird, durch den die Gewichtskomponente (P1) des Fahrzeugs (2) kompensiert wird, sowie einen Anfahrstabilisierungsvorgang (STAB), bei dem die Anfahrstabilität des Fahrzeugs (2) an der Steigung (1) durch Bremsen erhalten wird, einen Entlastungsvorgang (SLGM), bei dem die Übertragung des Motordrehmomentanteils (k) auf das Antriebsrad (22) unterbrochen wird, und einen Fahrzeugfreigabevorgang (LBR), der durch eine Beschleunigungsanforderung (DEM_ACC) des Fahrzeugs ausgelöst wird und bei dem die Übertragung des Motordrehmoments (K) auf das Antriebsrad (22) fortgesetzt wird und die Bremsung deaktiviert wird, um es dem Fahrzeug (2) zu gestatten, an der Steigung (1) wieder anzufahren, **dadurch gekennzeichnet, dass** der Stabilisierungsvorgang (STAB) einen Schritt (MES_t) zum Messen der Dauer des Gleichgewichtszustands des Fahrzeugs (2) an der Steigung gerechnet ab dem Zeitpunkt (To) des Auftretens dieses Zustands umfasst und dass der Stabilisierungsvorgang (STAB) durch Abbremsen des Fahrzeugs (2) spätestens nach einer Verzögerungszeit (δ) gerechnet ab dem Zeitpunkt (To) des Auftretens des Gleichgewichtszustands erfolgt, und zwar durch Betätigung seines dynamischen Bremssystems (24) höchstens während eines ersten Zeitintervalls (T1), sowie durch Abbremsen des Fahrzeugs (2) durch Betätigung seines statischen Bremssystems (25), wenn keine Beschleunigungsanforderung (DEM_ACC) des Fahrzeugs vor Ablauf des ersten Zeitintervalls (T1) erfolgt, wobei das statische Bremssystem (25) aktiv bleibt, solange keine solche Anforderung (DEM_ACC) erfolgt.

2. Verfahren nach Anspruch 1, **dadurch gekennzeichnet, dass** es einen Umkehrvorgang (INVERS) umfasst, der bedingt ausgelöst wird durch eine Beschleunigungsanforderung (DEM_ACC), wenn das Fahrzeug (2) durch sein statisches Bremssystem (25) an der Steigung (1) anfahrstabilisiert ist, und darin besteht, das dynamische Bremssystem (24) zu betätigen, indem das statische Bremssystem (25) vor dem Fahrzeugfreigabevorgang (LBR) deaktiviert wird.

3. Verfahren nach einem der vorangehenden Ansprüche, **dadurch gekennzeichnet, dass** die Betätigung des dynamischen Bremssystems (24) das Einschalten einer Elektro-Hydropumpe (241) umfasst, die einen Hydraulikbremsaufnehmer (242) mit unter Druck stehender Bremsflüssigkeit versorgt.

4. Verfahren nach einem der vorangehenden Ansprüche, **dadurch gekennzeichnet, dass** die Betätigung des statischen Bremssystems (25) das Einschalten eines elektrischen Getriebemotors (251) umfasst, der ein Betätigungsseil (252) einer Feststellbremse (253) antreibt.

## Claims

1. Method of managing the stability on a slope (1) of a motor vehicle (2) having a weight component (P1) oriented along the slope (1), equipped with an engine (21) developing a torque (K) at least part of which is transmitted to at least one driving wheel (22) via a controlled clutch (23), and provided with a dynamic braking system (24) and a static braking system (25), the method comprising a recurrent test (EQUIL) for detecting an equilibrium state of the vehicle (2) on the slope obtained by transmission to the driving wheel (22) of a fraction (k) of the engine torque (K) that compensates the weight component (P1) of the vehicle (2), a stabilisation operation (STAB) in which the vehicle (2) is stabilised on the slope (1) by applying the brakes, a relieving operation (SGLM) in which the transmission of the fraction (k) of the engine torque to the driving wheel (22) is interrupted, and an operation (LBR) of releasing the vehicle that is triggered by a demand (DEM_ACC) for acceleration of the vehicle and in which transmission of the engine torque (K) to the driving wheel (22) is re-established and the brakes are released to enable the vehicle (2) to move off on the slope (1), which method is **characterised in that** the stabilisation operation (STAB) includes a step (MES_t) of measuring the duration of the equilibrium state of the vehicle (2) on the slope (1) starting from the time (To) at which that state begins and **in that** the stabilisation operation (STAB) is effected by applying the brakes of the vehicle (2) at the latest after a time-delay (δ) starting from the time (To) at which the equilibrium state begins by actuating its dynamic braking system (24) during at most a first time interval (T1) and by braking the vehicle (2) by actuating its static braking system (25) if there is no demand (DEM_ACC) for acceleration of the vehicle before the end of the first time interval (T1), the static braking system (25) remaining active for as long as there is no such demand (DEM_ACC).

2. Method according to claim 1, **characterised in that** it comprises a changeover operation (INVERS) that is conditionally triggered by a demand (DEM_ACC) for acceleration when the vehicle (2) is stabilised on the slope (1) by a static braking system (25) and consists in actuating the dynamic braking system (24) on deactivating the static braking system (25) before the operation (LBR) of releasing the vehicle.

3. Method according to either of the preceding claims, **characterised in that** actuation of the dynamic braking system (24) comprises starting an electro-hydraulic pump (241) feeding pressurised brake fluid to a hydraulic brake receiver (242).

4. Method according to any one of the preceding claims, **characterised in that** actuation of the static braking system (25) comprises starting an electrical gear motor (251) driving a cable (252) for actuating a parking brake (253).
